## Europäisches Patentamt

## European Patent Office

## Office européen des brevets

(11) Publication number: **0 149 612**
**B1**

(12) **EUROPEAN PATENT SPECIFICATION**

(45) Date of publication of patent specification: **15.06.88**

(51) Int. Cl.⁴: **E 21 B 17/042, F 16 L 15/00**

(21) Application number: **84901692.8**

(22) Date of filing: **09.04.84**

(86) International application number:
**PCT/US84/00520**

(87) International publication number:
**WO 84/04352 08.11.84 Gazette 84/26**

(54) **TUBULAR CONNECTION WITH CYLINDRICAL AND TAPERED STEPPED THREADS.**

(30) Priority: **26.04.83 US 488633**
**26.04.83 US 488778**

(43) Date of publication of application:
**31.07.85 Bulletin 85/31**

(45) Publication of the grant of the patent:
**15.06.88 Bulletin 88/24**

(84) Designated Contracting States:
**AT BE CH DE FR GB LI LU NL SE**

(56) References cited:
**US-A-2 211 179**
**US-A-3 224 799**
**US-A-3 989 284**
**US-A-4 009 893**
**US-A-4 192 533**
**US-A-4 244 607**
**US-A-4 253 687**
**US-A-4 373 754**

(73) Proprietor: **HYDRIL COMPANY**
**714 West Olympic Boulevard**
**Los Angeles California 90015 (US)**

(72) Inventor: **LANDRIAULT, L., Steven**
**15809 Lakeview**
**Houston, TX 77040 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

The invention relates generally to a tubular connection for tubular members used in the oilfield. Specifically, the invention relates to a connection for tubular members fabricated of high strength relatively thin wall material or of relatively heavy wall material as used under conditions of high tension and high pressure that are encountered in production tubing or casing employed in deep severe service oil or gas wells.

Downhole conditions in wells reaching depths over fifteen thousand feet (4,600m) include pressures from fifteen thousand (15,000) to twenty-five thousand (25,000) psi (1,000 to 1,400 bar) and temperatures approaching five hundred (500) degree fahrenheit (260°C). Downhole conditions are often characterized as severe when sweet gas $C_02$ or sour gas $H_2S$ is encountered. In order to withstand deep well and severe service conditions, production tubing and casing connectors are often fabricated from relatively thin walled high alloy steel that is not upset or cold formed. Such steel has very high strength and thus is not required to be as thick as low strength steels. Even where severe service conditions are not expected, there are instances where near maximum of tensile strength of the connection is required of non-upset or non-cold formed tubular members of relatively thin material.

Prior art connection designs provided on ends of tubular members of relatively thin material not having upsets or not processed by cold forming have been provided on a single thread geometry having a positive load flank thread. Such prior art design leads to radial crest to root thread interference causing significant assembly stresses and jumpout failures.

Straight or cylindrical two step thread designs are known in the prior art for such members of relatively thin material, but maximum tensile strength ratings of such designs may not be. achievable especially where service of the tubing members is expected in extremely deep wells. One example, US-A-4,192,533 has two pairs of cylindrical threads in axially spaced, stepped relation. These cylindrical threads are separated upon normal make-up by a pair of engaged shoulders. Two additional pairs of shoulders, each pair disposed adjacent a connection end, come into engagement only if excessive axial make-up results in coining of the pair of shoulders between the cylindrical thread pairs. Under normal make-up conditions, the only sealing engagement between the pin and box members is provided by the interengaged shoulders situated between the pairs of cylindrical threads.

Also known are connections such as US-A-3,989,284 which employs dove-tail type thread, such that in operation, the rotational movement between the mating pin and box members will stop when the wedges or threads are made up on the flanks of the groove between the thread. Thus, the wedging action of the mating dove-tail threads provides a positive stop for make-up without the need of auxiliary shoulders.

Alternatively, under conditions of high tension and high pressure which demand that heavy wall casing be used as production casing or tie-back casing in deep severe service oil or gas well, the production casing is often required to be three times as thick as standard API walls for comparable outside diameter pipe sizes.

Inherent with the increased wall thickness required for deep severe service wells is increased string weight and rigidity of the tubular members. Prior art thick walled connections have had a tendency for thread jump-out and seal galling. These disadvantages of prior art connections for thick walled tubular members are attributable to positive flank thread profiles of the long tubular strings and the rigidity of the thick walled casings.

Thus, there has developed a need in the tubular connection industry for a connection design applicable for tubular members of relatively thin walled material or of increased wall thickness adapted for service under deep and/or severe conditions or other conditions.

The present invention therefore provides a tubular connection of pin and box members defining an axis, the connection comprising first and second pairs of axially spaced, interengaged, hooked threads having negative load angle flanks on the respective members, the first pair of threads being stepped from the second pair of threads and reverse angle torque shoulder means provided, respectively, on the pin and box members, characterized in that for deep severe service well conditions the connection upon normal makeup thereof has a first pair of engaged sealing surfaces on the pin and box members disposed adjacent the end of the pin member, and a second pair of engaged sealing surfaces on the pin and box members disposed axially between the first and second pairs of threads, said connection further characterized by at least one of said pair of threads being provided on a taper angle with respect to the axis, the second pair of sealing surfaces between the first and second pair of threads being conical surfaces provided at a steeper angle than the taper angle of said one pair of threads, and said reverse angle torque shoulder means comprising a shoulder disposed on the end of the pin member and a shoulder disposed on the interior end of the box member for engagement upon normal make up of the connection.

The thin walled tubular connection of this invention is improved in that it exhibits reduced susceptibility of the connection to stress corrosion cracking in a severe environment.

A thick walled tubular connection as modified in accordance with this invention provides a connection which allows for adjustment to tolerance variations in outside diameter and inside diameter of the pipes body without weakening the connection.

Further, the thin walled or thick walled connection of the invention inhibits excessive compression forces from radially collapsing the end of the pin member. More specifically this connection preferably creates axial compression of the internal surface of the pin thereby reducing the susceptibility of the connection to stress corrosion cracking in a severe service environment.

A further feature of the invention is that the connection provides sealing surfaces which increase the seal radial load distribution over that provided by prior art connections thereby reducing the tendency for galling by reducing peak seal load.

Another advantage of the invention is that it provides a connection which combats the tendency for jump-out by locking the pin and box together thereby reducing collapse of the pin and expansion of the box.

Further features and advantages of the invention will be described below with reference to the following description of preferred embodiments of the invention, taken in conjunction with the accompanying drawings of which:

Figure 1 is a cross-section through a first embodiment of a tubular connection made in accordance with the invention showing pin and box members interengaged;

Figure 2 is an enlarged illustration of a threaded portion of the connection of Figure 1 illustrating hooked threads; and

Figure 3 is an illustration of the coupling of Figure 1 connecting pin members of two tubular members.

Figure 4 is a cross-section through a second embodiment of a tubular connection made in accordance with the invention showing pin and box members interengaged;

Figure 5 is an enlarged illustration of a threaded portion of the connection of Figure 4 illustrating hooked threads; and

Figure 6 is an illustration of the coupling of Figure 4 connecting pin members of two tubular members.

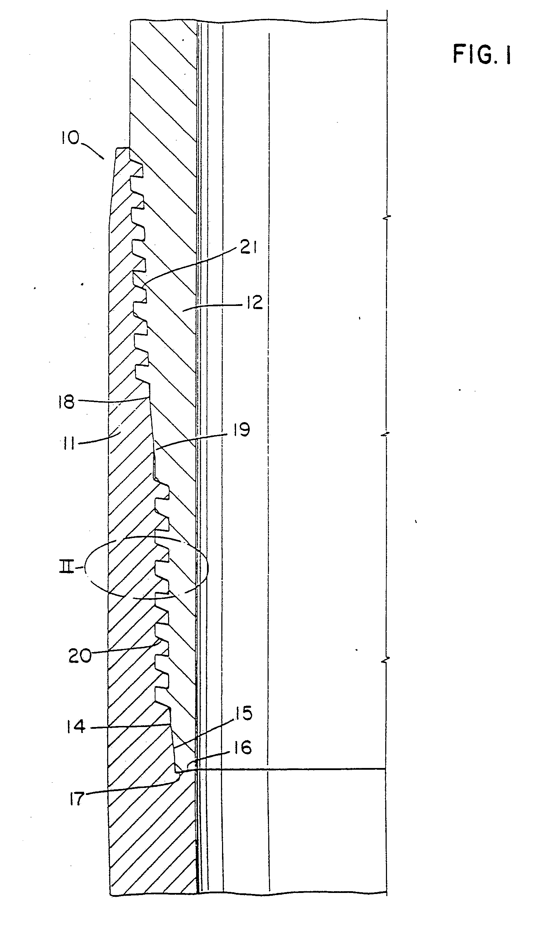

Figure 1 illustrates a first embodiment of the ' invention in which a relatively thin-walled tubular connection 10 includes a pin member 12 threadedly interengaged with a box member 11. The pin member 12 and box member 11 have first and second threaded surfaces 21 and 20. The first threaded surface 21 is axially spaced from the second threaded surface 20. The first threaded surface 21 is provided on a taper angle with respect to the axis of the connection of the tubular members. The second threaded surface 20 is provided on a straight or cylindrical profile with respect to the axis of the connection of the tubular members. The first threaded surface 21 is radially stepped with respect to the second threaded surface 20.

The tapered threads on surface 21 allow the threaded connection to run out to the tubular member outside diameter, thereby achieving a higher tensile rating than could be obtained if threaded surface 21 were a cylindrical thread separated by a step between cylindrical threaded surface 20.

Metal-to-metal frustro-conical sealing surfaces 18 and 19 are provided axially between first and second threaded surfaces 21 and 20. Metal-to-metal frustro-conical sealing surfaces 14 and 15 are provided adjacent the end of the pin and the interior end of the box. Complementary reverse angle torque shoulders 16 and 17 are provided on the end of the pin 12 and on the interior end of the box 11.

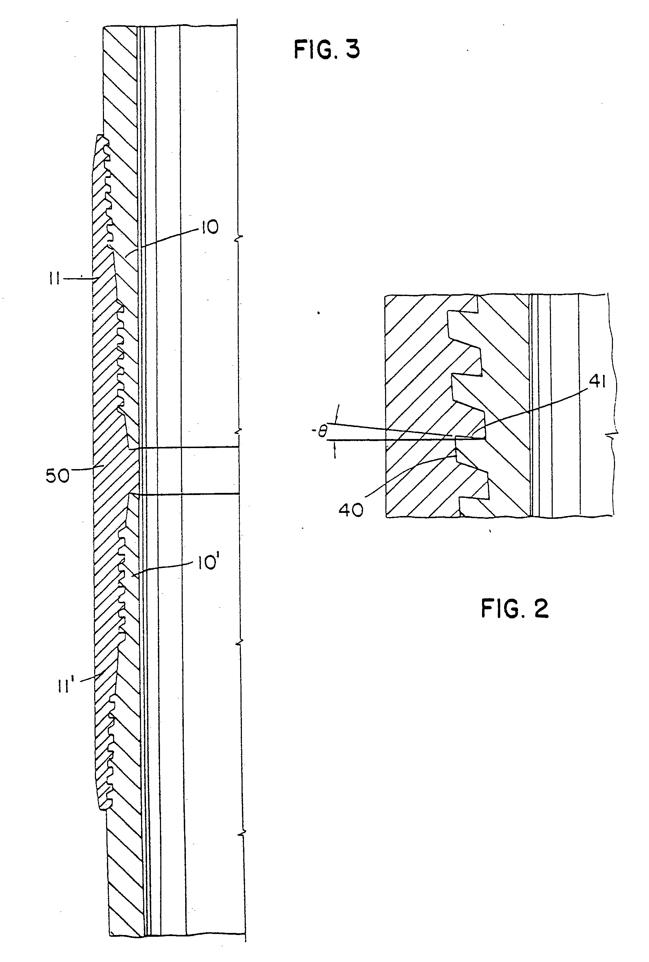

According to the invention, the threaded surfaces 21 and 20 are preferably provided in the form of hooked threads. An exemplary thread is illustrated in Figure 2 by reference number 40 showing that the load flank 41 is provided at a negative angle $(-\theta)$ with respect to a radial plane through the thread.

The threaded connection including the two step profile, facilitates deep stabbing and ease of make-up between the pin member 12 and the box member 11. The hooked threads of cylindrical threaded surfaces 20 are relatively less susceptible to thread hang-up on threads of tapered cylindrical threaded surfaces 21 because of the tapering of threaded surfaces 21. That is, upon disengagement of the pin 12 from the box 11, the threaded pin of surface 20 is relatively less likely to hang up on the box threaded surface 21 because of the increasing inside diameter of the box threads of the tapered surface 21.

Providing the taper angle of threaded surface 21 in combination with the cylindrical stepped threads of threaded surfaces 20 enables the entire connection to have maximum thread and critical section areas allowing uniform reduction in section flexibility around the sealing regions and reduction of the relative step height between the stepped thread regions. The taper of the threads of threaded surface 21 also allows for adjustment to tolerance variations in pipe outside diameter and inside diameter provided by tubular fabricators without weakening the connection.

The torque shoulders 16 and 17 are completely internal to the connection and create an essentially recess free bore to enhance fluid flow. The torque shoulders serve as a positive stop and locking means as the pin and box members are assembled under torquing conditions. The reverse angle of the torque shoulder also serves to inhibit excessive hoop compressive forces from collapsing the end of the pin 12. The reverse shoulder angle also fixes the relation between the end of the pin and the interior end of the box. The internal torque shoulder also creates axial compression along an axial region of the internal surface of the pin thereby reducing the susceptibility of the connection to stress corrosion cracking in a severe service environment. The compressive force resulting from the reverse angle torque shoulder also tends to cause the seal region defined by sealing surfaces 14 and 15 to expand radially due to the end load.

The metal-to-metal seals defined by sealing surfaces 14 and 15 and 18 and 19 are provided respectively as an internal seal and as a backup seal for internal pressure and a primary external seal. The sealing angles of sealing surfaces 14 and 15 and 18 and 19 are more shallow than typical cylindrical two-step metal-to-metal seals. The shallowness of the angles of the sealing surfaces increases the sealing surface contact area thereby increasing the seal radial load distribution and reducing the tendency for galling by reducing the peak sealing load.

The first and second pairs of conical sealing surfaces are preferably provided at steeper angles than the taper angle of the first pair of threads. Although the precise angles of the sealing surfaces and taper angle of the first pair of threads are dependent on the wall thickness of the tubular members to be connected, the first and second pair of conical sealing surfaces are preferably provided at an angle of approximately four to fourteen degrees with respect to the axis of the joint while the taper angle of the first pair of threads is preferably provided approximately two to eight degrees with respect to the axis of the joint.

The hooked threads provided in the tubular connection 10 inhibit the tendency for thread jumpout. The negative angle load flank threads, when subjected to tension between the pin 12 and the box 11, develop a hoop compression component. This hoop compression locks the pin and box together thereby reducing collapse of the pin and expansion of the box. A similar reaction occurs when the tubular connection is subjected to bending wherein on the tension side of the connection, the hooked threads develop a hoop compression component locking that side of the pin and box together, while the torque shoulder absorbs the load on the compression side of the bending connection.

Figure 3 illustrates a connector 50 serving to connect the ends of two tubular members together. Two box threaded surfaces 11 and 11' serve to interengage with pin threaded surfaces 10 and 10' of the two tubular members. The connection between box 11' and pin 10' is the mirror image of that between box 11 and pin 10.

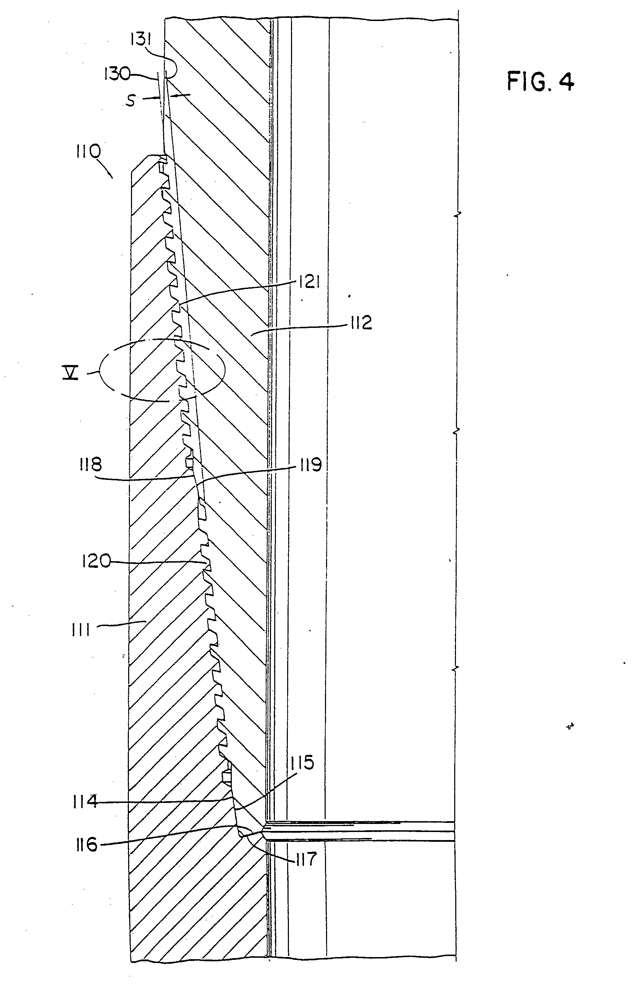

Figure 4 illustrates a second preferred embodiment of the invention wherein a thick walled tubular connection 110 is disclosed in which a pin member 112 is threadedly interengaged with a box member 111. The pin member 112 and box member 111 have first and second threaded surfaces 121 and 120 which are preferably provided on identical taper angles with respect to the axis of the joint. Under certain conditions, the taper angles of the first and second threaded surfaces may be provided on different taper angles. Extension lines 130 and 131 are shown extending along the roots respectively of the threaded surfaces 121 and 120 of pin member 112. The taper angles measured with respect to the axis of lines 130 and 131 are substantially identical in that lines 130 and 131 are parallel but offset by a distance S perpendicular to the two taper extension lines 130 and 131. The magnitude of distance S depends on the wall thickness of the tubular member and the length of sealing surfaces 118 and 119.

Metal-to-metal frustro-conical sealing surfaces 118 and 119 are provided axially between first and second threaded surfaces 121 and 120. Metal-to-metal sealing surfaces 114 and 115 are provided adjacent the end of the pin and the interior end of the box. Complementary reverse angle torque shoulders 116 and 117 are provided on the end of the pin 112 and on the interior end of the box 11.

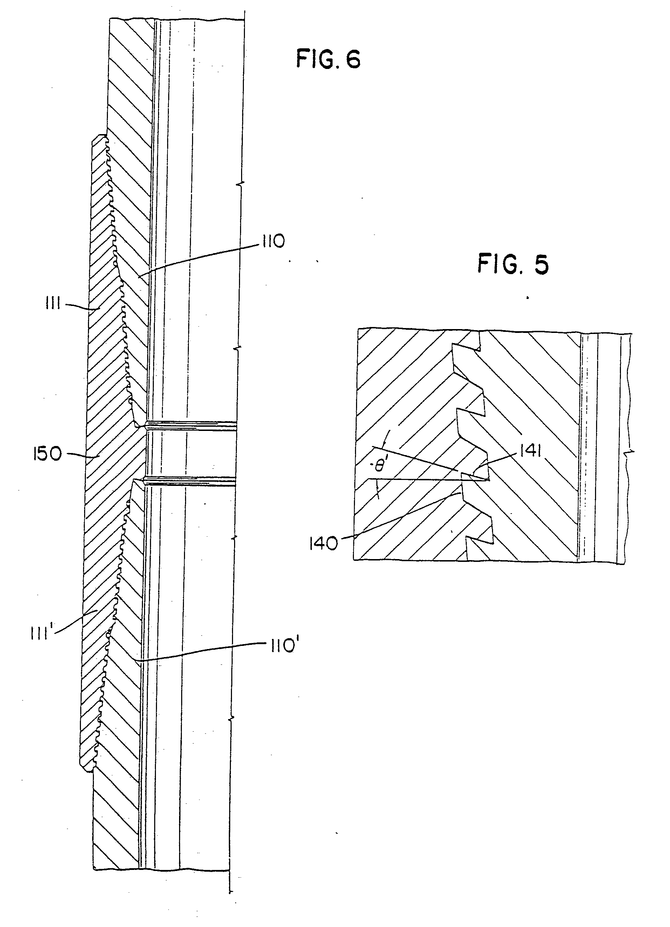

The threaded surfaces are preferably provided in the form of hooked threads. An exemplary thread is illustrated in Figure 5 by reference number 140 showing that the load flank 141 is provided at a negative angle ($\theta'$) with respect to a radial plane through the thread.

The threaded connection including the two-step profile, facilitates deep stabbing and ease of make-up between the pin member 112 and the box member 111. Providing the taper angles as illustrated by taper lines 130 and 131 enables the connection to have maximum thread and critical section areas allowing uniform reduction in section flexibility around the sealing regions, and reduction of the relative step height S between the stepped thread regions. The taper of the threads also allows for adjustment to tolerance variations in pipe outside diameter and inside diameter provided by tubular fabricators without weakening the connection.

The torque shoulders 116 and 117 are completely internal to the connection and create an essentially recess free bore to enhance fluid flow. The torque shoulders serve as a positive stop and locking means as the pin and box members are assembled under torquing conditions. The reverse angle of the torque shoulder serves to inhibit excessive hoop compressive forces from collapsing the end of the pin 112. The reverse shoulder angle also fixes the relation between the end of the pin and the interior end of the box. The internal torque shoulder also creates axial compression along an axial region of the internal surface of the pin thereby reducing the susceptibility of the connection to stress corrosion cracking in a severe service environment. The compressive force resulting from the reverse angle torque shoulder also tends to cause the seal region defined by sealing surfaces 114 and 115 to expand radially due to the end load.

The metal-to-metal seals defined by sealing surfaces 114 and 115 and 118 and 119 are provided respectively as an internal seal and as a backup seal for internal pressure and a primary external seal. Due to the increased rigidity of the thick tubular walls, the threaded surfaces are provided on tapers thereby allowing the sealing angles to be more shallow than typical cylindrical two-step metal-to-metal seals. The shallowness of the angles of the sealing surfaces increases the sealing surface contact area thereby increasing the seal radial load distribution and reducing the tendency for galling by reducing the peak sealing load.

The first and second pairs of conical sealing surfaces are preferably provided at steeper angles than the taper angle. Although the precise angles of the sealing surfaces and taper angles are dependent on the wall of the connection, the first and second pair of conical sealing surfaces are preferably provided at an angle of approximately four to fourteen degrees with respect to the axis of the joint while the taper angle of the first and second pair of threads is preferably approximately two to eight degrees with respect to the axis of the joint.

The hooked threads provided in the tubular connection 110 inhibit the tendency for thread jumpout. The negative angle load flank threads, when subjected to tension between the pin 112 and the box 111, develop a hoop compression component. The hoop compression locks the pin and box together thereby reducing collapse of the pin and expansion of the box. A similar reaction occurs when the tubular connection is subjected to bending wherein on the tension side of the connection, the hooked threads develop a hoop compression component locking that side of the pin and box together, while the torque shoulder absorbs the load on the compression side of the bending connection.

Figure 6 illustrates a connector 150 serving to connect the ends of the thick walled tubular members. Two box threaded surfaces 111 and 110' serve to interengage with pin threaded surfaces 110 and 111 of the two tubular members. The connection between box 111' and pin 110' is the mirror image of that between box 111 and pin 110.

**Claims**

1. A tubular connection (10, 110) of pin and box members (11, 12; 111, 112) defining an axis, the connection comprising first and second pairs of axially spaced, interengaged, hooked threads (20, 21; 120, 121) having negative load angle flanks on the respective members, the first pair of threads (20, 120) being stepped from the second pair of threads (21, 121) and reverse angle torque shoulder means (16, 116; 17, 117) provided, respectively, on the pin and box members (11, 12; 111, 112), characterized in that for deep severe service well conditions the connection (10, 110) upon normal make-up thereof has a first pair of engaged sealing surfaces (14, 15; 114, 115) on the pin and box members (11, 12; 111, 112) disposed adjacent the end of the pin member (12, 112), and a second pair of engaged sealing surfaces (18, 19; 118, 119) on the pin and box members (11, 12; 111, 112) disposed axially between the first and second pairs of threads (20, 120; 21, 121), said connection further characterized by at least one of said pair of threads (21, 121) being provided on a taper angle with respect to the axis, the second pair of sealing surfaces (18, 19; 118, 119) between the first and second pair of threads (20, 21; 120, 121) being conical surfaces provided at a steeper angle than the taper angle of said one pair of threads (21, 121), and said reverse angle torque shoulder means comprising a shoulder (16, 116) disposed on the end of the pin member (12, 112) and a shoulder (17, 117) disposed on the interior end of the box member (11, 111) for engagement upon normal make up of the connection.

2. The connection of claim 1, characterized in that the second pair of threads (20) are cylindrical threads.

3. The connection of claim 1, characterized in that both the first and second pairs of threads (120, 121) are provided on first and second taper angles with respect to the axis of the connection (120) which taper angles are preferably identical.

4. The connection of claim 1, 2 or 3, characterized in that the taper angles of one or both of said pairs of threads (21, 121) are provided on a taper angle of a range of approximately two to eight degrees with respect to the axis of the connection (10, 110).

5. The connection of any of claims 1 to 4, characterized in that said hooked threads (40, 140) develop hoop compression when the connection (10, 110) is subjected to tension thereby locking the pin and box (11, 12; 111, 112) together reducing the tendency for collapse of the pin and expansion of the box.

6. The connection of any of claims 1 to 5, characterized in that when said connection (10, 110) is subjected to bending, the hooked threads (40, 140) develop hoop compression on the side of the connection in tension as a result of the bending while the engaged reverse angle torque shoulders (16, 17; 116, 117) absorb the bending load on the other side of the connection (10, 110) put in compression as a result of the bending.

7. The connection of any of claims 1 to 6, characterized in that the engaged reverse angle torque shoulders (16, 17; 116, 117) are adapted to create a recess free bore to enhance fluid flow through the pipe, to serve as a positive stop and locking device for connection assembly under torquing conditions, to inhibit excessive hoop compressive forces from collapsing the end of the pin (12, 112) to fix the axial relation of the end of the pin (12, 112) to the box (11, 111) and to create axial compression over the internal surface to reduce the susceptibility of the joint (10, 110) to stress corrosion cracking in a severe service environment and to cause the first pair of engaged conical sealing surfaces (14, 15; 114, 115) to expand radially.

8. The connection of any of the preceding claims, characterized in that the first and second pairs of sealing surfaces (14, 15, 18, 19; 114, 115, 118, 119) are frusto-conical surfaces provided from a range of angles of approximately four to fourteen degrees with respect to the axis of the connection (10, 110).

9. A pin member (12, 112) for a tubular member and adapted for coaxial connection to a box member (11, 111) comprising first and second axially spaced, interengaged hooked threads (20, 21; 120, 121) having negative load angle flanks, the first thread (20, 120) being stepped from the second thread (21, 121), and reverse angle torque shoulder means (16, 116) provided on the pin member (12, 112), characterized in that for deep severe service well conditions the pin member (12, 112) has a first sealing surface (15, 115) on the pin member (12, 112) disposed adjacent the end of the pin member (12, 112), a second sealing surface (19, 119) on the pin member (12, 112) disposed axially between the first and second threads (20, 120; 21, 121), said pin member further characterized by at least one of said thread (21, 121) being provided on a taper angle with respect to the axis of the pin, the second sealing surface (18, 19; 118, 119) between the first and second pair of threads (20, 21; 120, 121) being a conical surface provided at a steeper angle than the taper angle of said first thread (21, 121) and said reverse angle torque shoulder means comprising a shoulder (16, 116) disposed on the end of the pin member (12, 112), the first and second pin sealing surfaces (14, 19; 114, 119) and said pin shoulder being engageable with mating box sealing surfaces (15, 18; 115, 118) and a box shoulder (17, 117), respectively, upon normal make-up of the pin (12) and box (11) into a tubular connection (10).

10. A box member (11, 111) adapted for coaxial connection to a pin member (12, 112), the box member comprising first and second axially spaced interengaged hooked threads (20, 21; 120, 121) having negative load angle flanks, the first threads (20, 120) being stepped from the second threads (21, 121), and reverse angle torque shoulder means (16, 116) provided on the box member, characterized in that for deep severe service well conditions the box member (11, 111) upon normal make-up thereof has a first sealing surface (14, 144) on the box member (11, 111) disposed adjacent the end of the pin member (12, 112), and a second sealing surface (18, 118) on the box member (11, 111) disposed axially between the first and second threads (20, 120; 21, 121), said box member further characterized in that at least one of said threads (21, 121) being provided on a taper angle with respect to the box axis, the second sealing surface (18, 118) between the first and second threads (20, 21; 120, 121) being a conical surface provided at a steeper angle than the taper angle of said first threads (21, 121) and said reverse angle torque shoulder means comprising a shoulder (17, 117) disposed on the interior end of the box member (11, 111), the first and second box sealing surfaces (15, 18; 115, 118) and said box shoulder (17, 117) being engageable with mating pin sealing surfaces (14, 19; 114, 119) and a pin shoulder (16, 116), respectively, upon normal make-up of the box (11, 111) and pin (12, 112) into a tubular connection (10, 110).

**Patentansprüche**

1. Rohrverbindung (10, 110) von Zapfen- und Muffenteilen (11, 12; 111, 112), die eine Achse definieren, wobei die Verbindung ein erstes und ein zweites Paar von mit axialem Abstand vorgesehenen, ineinandergreifenden, hakenförmigen Gewinden (20, 21; 120, 121) umfaßt, die an den jeweiligen Teilen Lastflanken mit negativem Winkel haben, wobei das erste Paar Gewinde (20, 120) vom zweiten Paar Gewinde (21, 121) abgesetzt ist, und umgekehrt gewinkelte Drehmomentschultermittel (16, 116; 17, 117) am Zapfen- bzw. Muffenteil (11, 12; 111, 112) vorgesehen sind, dadurch gekennzeichnet, daß die Verbindung (10, 110) nach ihrem normalen Zusammenschrauben für tiefe, schwierige Bohrbetriebsbedingungen ein benachbart dem Ende des Zapfenteils (12, 112) angeordnetes erstes Paar von in Eingriff stehenden Dichtflächen (14, 15; 114, 115) an den Zapfen- und Muffenteilen (11, 12; 111, 112) und ein axial zwischen dem ersten und dem zweiten Paar Gewinde (20, 120; 21, 121) angeordnetes zweites Paar von in Eingriff stehenden Dichtflächen (18, 19; 118, 119) an den Zapfen- und Muffenteilen (11, 12; 111, 112) aufweist, welche Verbindung weiter dadurch gekennzeichnet ist, daß wenigstens ein Paar Gewinde (21, 121) auf einem Konuswinkel bezüglich der Achse vorgesehen ist, wobei die Dichtflächen (18, 19; 118, 119) des zweiten Paares zwischen dem ersten und dem zweiten Paar Gewinde (20, 21; 120, 121) konische Flächen mit einem stärkeren Winkel als der Konuswinkel des einen Gewindepaares (21, 121) sind und die umgekehrt gewinkelten Drehmomentschultermittel eine am Ende des Zapfenteils (12, 112) angeordnete Schulter (16, 116) und eine am inneren Ende des Muffenteils (11, 111) angeordnete Schulter (17, 117) zum Eingriff bei normalem Zusammenschrauben der Verbindung umfassen.

2. Verbindung nach Anspruch 1, dadurch gekennzeichnet, daß die Gewinde (20) des zweiten Paares zylindrische Gewinde sind.

3. Verbindung nach Anspruch 1, dadurch gekennzeichnet, daß das erste sowie das zweite Gewindepaar (120, 121) auf einem ersten bzw. zweiten Konuswinkel bezüglich der Achse der Verbindung (120) angeordnet sind, wobei die Konuswinkel vorzugsweise identisch sind.

4. Verbindung nach Anspruch 1, 2 oder 3, dadurch gekennzeichnet, daß die Konuswinkel eines der oder beider Gewindepaare (21, 121) in einem Konuswinkelbereich von zwei bis acht Grad bezüglich der Achse der Verbindung (10, 110) liegen.

5. Verbindung nach einem der Ansprüche 1 bis 4, dadurch gekennzeichnet, daß die hakenförmigen Gewinde (40, 140) eine Reifenpressung entwickeln, wenn die Verbindung (10, 110) einer Zugkraft ausgesetzt wird, wodurch Zapfen und Muffe (11, 12; 111, 112) zusammengeschlossen werden, wobei die Neigung zum Eindrücken des Zapfens und Aufweiten der Muffe reduziert wird.

6. Verbindung nach einem der Ansprüche 1 bis 5, dadurch gekennzeichnet, daß die hakenförmigen Gewinde (40, 140), wenn die Verbindung (10, 110) einer Biegebeanspruchung ausgesetzt wird, auf der Seite, wo die Verbindung als Folge der Biegebeanspruchung unter Zug steht, eine Reifenpressung entwickeln, während die in Eingriff stehenden, umgekehrt gewinkelten Drehmomentschultern (16, 17; 116, 117) auf der anderen Seite der Verbindung (10, 110), die als Folge der Biegebeanspruchung unter Druck gesetzt ist, die Biegelast aufnehmen.

7. Verbindung nach einem der Ansprüche 1 bis 6, dadurch gekennzeichnet, daß die in Eingriff stehenden, umgekehrt gewinkelten Drehmomentschultern (16, 17; 116, 117) geeignet sind, eine Vertiefungs-freie Bohrung zu schaffen, um den Fluidstrom durch das Rohr zu steigern, als formschlüssige Anschlag- und Verriegelungseinrichtung für eine Verbindungsanordnung unter Drehmomentbedingungen zu fungieren, übermäßige Reifendruckkräfte am Eindrücken des Endes des Zapfens (12, 112) zu hindern die axiale Lage des Endes des Zapfens (12, 112) relativ zur Muffe (11, 111) zu fixieren und eine axiale Kompression über die innere Oberfläche zu schaffen, um die Verbindung (10, 110) weniger anfällig für Belastungs-Korrosions-Rißbildung in einer schwierigen Arbeitsumgebung zu machen und das erste Paar von in Eingriff stehenden konischen Dichtflächen (14, 15; 114, 115) zu veranlassen, sich radial auszudehnen.

8. Verbindung nach einem der vorhergehenden Ansprüche, dadurch gekennzeichnet, daß die Dichtflächen (14, 15, 18, 19; 114, 115, 118, 119) des ersten und zweiten Paares Kegelstumpfflächen in einem Winkelbereich von ungefähr vier bis vierzehn Grad bezüglich der Achse der Verbindung (10, 110) sind.

9. Zapfenteil (12, 112) für einen Rohrteil und geeignet zur koaxialen Verbindung mit einem Muffenteil (11, 111), mit einem ersten und einem zweiten, mit axialem Abstand vorgesehenen, eingreifenden, hakenförmigen Gewinde (20, 21; 120, 121), die Lastflanken mit negativem Winkel haben, wobei das erste Gewinde (20, 120) vom zweiten Gewinde (21, 121) abgesetzt ist, und umgekehrt gewinkelte Drehmomentschultermittel (16, 116) am Zapfenteil (12, 112) vorgesehen sind, dadurch gekennzeichnet, daß der Zapfenteil (12, 112) für tiefe, schwierige Bohrbetriebsbedingungen eine an ihm benachbart dem Ende des Zapfenteils (12, 112) angeordnete erste Dichtfläche (15, 115) und eine axial zwischen dem ersten und dem zweiten Gewinde (20, 120; 21, 121) am Zapfenteil (12, 112) angeordnete zweite Dichtfläche (19, 119) aufweist, welcher Zapfenteil weiter dadurch gekennzeichnet ist, daß wenigstens eines der Gewinde (21, 121) auf einem Konuswinkel bezüglich der Achse des Zapfens vorgesehen ist, wobei die zweite Dichtfläche (18, 19; 118, 119) zwischen dem ersten und dem zweiten Paar Gewinde (20, 21; 120, 121) eine konische Fläche mit einem stärkeren Winkel als der Konuswinkel des ersten Gewindes (21, 121) ist und die umgekehrt gewinkelten Drehmomentschultermittel eine am Ende des Zapfenteils (12, 112) angeordnete Schulter (16, 116) aufweisen, wobei die erste und die zweite Zapfen-Dichtfläche (14, 19; 114, 119) und die Zapfen- Schulter mit passenden Muffen-Dichtflächen (15, 18; 115, 118) bzw. einer Muffen-Schulter (17, 117) bei normalem Zusammenschrauben von Zapfen (13) und Muffe (11) zu einer Rohrverbindung (19) in Eingriff bringbar sind.

10. Muffenteil (11, 111), geeignet zur koaxialen Verbindung mit einem Zapfenteil (12, 112), wobei der Muffenteil ein erstes und ein zweites mit axialem Abstand vorgesehenes, eingreifendes, hakenförmiges Gewinde (20, 21; 120, 121) umfaßt, die Lastflanken mit negativem Winkel haben, wobei das erste Gewinde (20, 120) vom zweiten Gewinde (21, 121) abgesetzt ist und umgekehrt gewinkelte Drehmomentschultermittel (16, 116) am Muffenteil vorgesehen sind, dadurch gekennzeichnet, daß der Muffenteil (11, 111) nach seinem normalen Zusammenschrauben für tiefe, schwierige Bohrbetriebsbedingungen am Muffenteil (11, 111) eine benachbart dem Ende des Zapfenteils (12, 112) angeordnete erste Dichtfläche (14, 114) und ein axial zwischen dem ersten und dem zweiten Gewinde (20, 120; 21, 121) angeordnete zweite Dichtfläche (18, 118) am Muffenteil (11, 111) aufweist, welcher Muffenteil weiter dadurch gekennzeichnet ist, daß wenigstens eines der Gewinde (21, 121) auf einem Konuswinkel bezüglich der Muffenachse vorgesehen ist, wobei die zweite Dichtfläche (18, 118) zwischen dem ersten und dem zweiten Gewinde (20, 21; 120, 121) eine konische Fläche mit einem stärkeren Winkel als der Konuswinkel des ersten Gewindes (21, 121) ist und die umgekehrt gewinkelten Drehmomentschultermittel eine am inneren Ende des Muffenteils (11, 111) angeordnete Schulter (17, 117) umfassen, wobei die erste und die zweite Muffen-Dichtfläche (15, 18; 115, 118) und die Muffen-Schulter (17, 117) mit passenden Zapfen-Dichtflächen (14, 19; 114, 119) bzw. einer Zapfen-Schulter (16, 116) bei normalem Zusammenschrauben von Muffe (11, 111) und Zapfen (12, 112) zu einer Rohrverbindung (10, 110) in Eingriff bringbar sind.

**Revendications**

1. Une connexion tubulaire (10, 110) d'éléments mâle et femelle (11, 12; 111, 112) définissant un axe, la connexion comprenant une première et une seconde paires de filets d'accrochage mutuellement en prise, axialement espacés (20, 21; 120, 121), comportant des flancs avec angles de charge négatifs sur les éléments respectifs, la première paire de filets (20, 120) étant décalée par rapport à la seconde paire de filets (21, 121) ainsi que des épaulements de transmission de couple à angle inverse (16, 116; 17, 117), prévus respectivement sur les éléments mâle et femelle (11, 12; 111, 112), caractérisée en ce que, pour des conditions de service sévères en forage profond, la connexion (10, 110), lors de son établissement normal, comporte une première paire de surfaces d'étanchéité (14, 15; 114, 115) mutuellement en contact sur les éléments mâle et femelle (11, 12; 111, 112), disposées dans des positions adjacentes à l'extrémité de l'élément mâle (12, 112), et une seconde paire de surfaces d'étanchéité (18, 19; 118, 119) mutuellement en contact sur les éléments mâle et femelle (11, 12; 111, 112), disposées axialement entre la première et la seconde paires de filets (20, 120; 21, 121), ladite connexion étant en outre caractérisée par le fait qu'au moins un des filets de ladite paire (21, 121) présente un certain angle d'inclinaison par rapport à l'axe, la seconde paire de surfaces d'étanchéité (18, 19; 118, 119) prévues entre la première et la seconde paires de filets (20, 21; 120, 121) étant des surfaces coniques présentant un angle plus grand que l'angle d'inclinaison de ladite première paire de filets (21, 121), et lesdits épaulements de transmission de couple à angle inverse comprenant un épaulement (16, 116) disposé à l'extrémité de l'élément mâle (12, 112) et un épaulement (17, 117) disposé à l'extrémité intérieure de l'élément femelle (11, 111), de manière à s'appliquer l'un contre l'autre lors de la réalisation normale de la connexion.

2. La connexion selon la revendication 1, caractérisée en ce que la seconde paire de filets (20) est formée de filets cylindriques.

3. La connexion selon la revendication 1, caractérisée en ce que la première et la seconde paires de filets (120, 121) présentent un premier et un second angles d'inclinaison par rapport à l'axe de la liaison (120), lesdits angles d'inclinaison étant de préférence identiques.

4. La connexion selon la revendication 1, 2 ou 3, caractérisée en ce que les angles d'inclinaison d'une ou bien des deux paires de filets précités (21, 121) sont prévus selon un angle d'inclinaison rentrant, dans une gamme comprise approximativement entre deux et huit degrés par rapport à l'axe de la connexion (10, 110).

5. La connexion selon l'une quelconque des revendications 1 à 4, caractérisée en ce que lesdits filets d'accrochage (40, 140) produisent une compression de frettage quand la liaison (10, 110) est soumise à une tension, en bloquant ainsi ensemble les éléments mâle et femelle (11, 12, 111, 112) afin de réduire la tendance à un aplatissement de l'élément mâle et à une dilatation de l'élément femelle.

6. La connexion selon l'une quelconque des revendications 1 à 5, caractérisée en ce que, quand ladite liaison (10, 110) est soumise à une flexion, les filets d'accrochage (40, 140) produisent une compression de frettage du côté de la connexion qui est sous tension résultant de la flexion, tandis que les épaulements de transmission de couple à angle inverse (16, 17; 116, 117) mutuellement en contact absorbent la charge de flexion de l'autre côté de la connexion (10, 110) qui est sous compression résultant de la flexion.

7. La connexion selon l'une quelconque des revendications 1 à 6, caractérisée en ce que les épaulements de transmission de couple à angle inverse mutuellement en contact (16, 17; 116, 117) sont adaptés pour définir un alésage exempt d'évidements afin d'améliorer l'écoulement de fluide dans le tube, de servir de dispositif d'arrêt et de blocage efficace pour relier l'ensemble dans des conditions de production de couple, pour empêcher des forces excessives de compression de frettage d'aplatir l'extrémité de l'élément mâle (12, 112) afin de fixer la relation axiale entre l'extrémité de l'élément mâle (12, 112) et l'élément femelle (11, 111), et de créer une compression axiale sur la surface intérieure en vue de réduire le joint (10, 110) pour le risque de fissuration par corrosion sous contrainte dans un environnement de service sévère, et pour faire en sorte que les surfaces coniques d'étanchéité de la première paire (14, 15; 114, 115) mutuellement en contact s'expansent radialement.

8. La connexion selon l'une quelconque des revendications précédentes, caractérisée en ce que la première et la seconde paires de surfaces d'étanchéité (14, 15, 18, 19; 114, 115, 118, 119) sont des surfaces tronconiques qui présentent une gamme d'angles compris approximativement entre 4 et 14° par rapport à l'axe de la connexion (10, 110).

9. Un élément mâle (12, 112) pour élément tubulaire et adapté pour une connexion coaxiale avec un élément femelle (11, 111) comprenant des premier et second filets d'accrochage (20, 21; 120, 121) en prise l'un avec l'autre, axialement espacés et comportant des flancs à angle de charge négatif, le premier filet (20, 120) étant décalé par rapport au second filet (21, 121), et des épaulements de transmission de couple à angle inverse (16, 116) prévus sur l'élément mâle (12, 112), caractérisé en ce que, pour supporter des conditions de service sévères en forage profond, l'élément mâle (12, 112) comporte une première surface d'étanchéité (15, 115) sur l'élément mâle (12, 112) dans une position adjacente à l'extrémité de l'élément mâle (12, 112), une seconde surface d'étanchéité (19, 119) sur l'élément mâle (12, 112) axialement entre les premier et second filets (20, 120; 21, 121), ledit élément mâle étant en outre caractérisé par le fait qu'au moins un desdits filets (21, 121) présente un angle d'inclinaison par rapport à l'axe de l'élément mâle, la seconde surface d'étanchéité (18, 19; 118, 119) située entre la première et la seconde paires de filets (20, 21; 120, 121) est une surface conique présentant un angle d'inclinaison plus fort que l'angle d'inclinaison du premier filet (21, 121), et que lesdits épaulements de transmission de couple à angle inverse comprennent un épaulement (16, 116) à l'extrémité de l'élément mâle (12, 112), les première et seconde surfaces d'étanchéité d'élément mâle (14, 19; 114, 119) et ledit épaulement de l'élément mâle pouvant entrer en contact respectivement avec des surfaces d'étanchéité correspondantes (15, 18; 115, 118) et un épaulement correspondant (17, 117) de l'élément femelle, lors d'un assemblage normal de l'élément mâle (12) et de l'élément femelle (11) pour former une connexion tubulaire (10).

10. Un élément femelle (11, 111) adapté pour une connexion coaxiale avec un élémént mâle (12, 112), l'élément femelle comprenant un premier et un second filet d'accrochage (20, 21; 120, 121), axialement espacés, en prise l'un avec l'autre et comportant des flancs à angle de charge négatif, les premiers filets (20, 120) étant décalés par rapport aux seconds filets (21, 121), et des épaulements de transmission de couple à angle inverse (16, 116) prévus sur l'élément femelle, caractérisé en ce que, pour supporter des conditions sévères de service en forage profond, l'élément mâle (12, 112), pour un assemblage normal de ce dernier, comporte une première surface d'étanchéité (14, 114) de l'élément femelle (11, 111) qui est disposé dans une position adjacente à l'extrémité de l'élément femelle (11, 111), et une seconde surface d'étanchéité (18, 118) prévue sur l'élément femelle (11, 111) et située axialement entre le premier et le second filets (20, 120; 21, 121), ledit élément femelle étant en outre caractérisé en ce qu'au moins l'un desdits filets (21, 121) présente un angle d'inclinaison par rapport à l'axe de l'élément femelle, la seconde surface d'étanchéité (18, 118) située entre les premier et second filets (20, 21; 120, 121) étant une surface conique présentant un angle d'inclinaison plus grand que l'angle d'inclinaison desdits premiers filets (21, 121), et que lesdits épaulements de transmission de couple à angle inverse comprennent un épaulement (17, 117) à l'extrémité intérieure dudit élément femelle (11, 111), lesdites première et seconde surfaces d'étanchéité de l'élément femelle (15, 18; 115, 118) et ledit épaulement de l'élément femelle (17, 117) pouvant entrer en contact respectivement avec des surfaces d'étanchéité correspondantes (14, 19; 114, 119) de l'élément mâle et un épaulement (16, 116) de l'élément mâle, lors d'un assemblage normal de l'élément femelle (11, 111) et de l'élément mâle (12, 112) pour former une connexion tubulaire (10, 110).

FIG. 1

0 149 612

FIG. 3

10

11

50

10'

11'

FIG. 2

41

-θ

40

2

FIG. 4

FIG. 6

FIG. 5